# FASCICULE DE BREVET EUROPEEN

(11) **EP 0 734 982 B1**
(45) Date de publication et mention de la délivrance du brevet: **04.08.1999**
(21) Numéro de dépôt: 96490018.7
(22) Date de dépôt: 26.03.1996
(51) Int. Cl.: B65G 47/61, B65G 1/137, B07C 5/34

(54) **Procédé de déchargement d'un convoyeur en boucle auquel sont suspendus des articles, moyens en vue de la mise en oeuvre de ce procédé et convoyeurs pourvus des dits moyens**
Verfahren zum Laden eines kreisförmigen Förderers mit aufgehängten Gegenständen,Mittel zur Durchführung des Verfahrens und mit dem genannten Mittel versehene Förderer
Method for loading a closed path conveyor with suspended articles, means for carrying out the method and conveyors provided with said means

(30) Priorité: 27.03.1995 FR 9503780
(43) Date de publication de la demande: 02.10.1996
(73) Titulaire: COMPAGNIE FINANCIERE COFINOR, S.A., F-14100 Lisieux (FR)
(72) Inventeur: Guinamard, Jean, 59650 Villeneuve d'Ascq (FR)
(74) Mandataire: Ecrepont, Robert

(56) Documents cités:
- EP-A- 0 516 970
- US-A- 4 991 719

## Description

L'invention se rapporte à un procédé de déchargement d'un convoyeur en boucle auquel sont suspendus des articles (voir US-A- 4 991 719).

Elle se rapporte également aux moyens en vue de la mise en oeuvre de ce procédé et aux convoyeurs pourvus desdits moyens.

Elle trouve application plus particulièrement mais non exclusivement dans le tri des vêtements.

Beaucoup d'entreprises confient des travaux tels le nettoyage des vêtements de travail de leur personnel à des entreprises spécialisées qui traitent donc ensemble les vêtements de plusieurs entreprises.

Pour ce traitement tel le nettoyage voire le repassage, si cela est nécessaire, ces vêtements sont donc mélangés.

Après ces traitements, il faut trier les vêtements pour les regrouper en fonction de leur propriétaire et leur faire parvenir.

Outre le regroupement par propriétaire, le tri de ces vêtements doit tenir compte au moins du sens de la tournée des camions chargés de cette mission voire en plus des impératifs de rangement que souhaitent les entreprises.

En effet, celles-ci peuvent, par exemple, demander que les vêtements soient en plus rangés par ordre alphabétique et/ou par service etc ...

Pour être en mesure de faire parvenir les vêtements à leur destinataire, ces vêtements portent un moyen d'identification tel un code barre.

Pour effectuer cette opération de tri, on fait appel à une installation de tri comprenant :
- un convoyeur en boucle comprenant un lien sans fin tel une chaine ou une bande souple se déplacant au long d'une trajectoire prédéterminée et présentant à intervalles réguliers des moyens d'accrochage, tels des orifices découpés dans une bande ou des crochets associés à une chaine etc ... sur lesquels moyens d'accrochage du convoyeur peuvent se suspendre, par exemple, à l'aide de cintres, les articules à trier, la position instantanée de ces moyens d'accrochage du convoyeur étant déterminable par rapport à un point de la trajectoire du convoyeur dit point de référence,
- des moyens dits de mémorisation mémorisant pour chaque moyen d'accrochage des données issues au moins indirectement du moyen d'identification associé au vêtement suspendu au moyen d'accrochage considéré,
- des moyens pour effectuer un tri informatique selon au moins un critère de tri,
- des moyens pour, après l'opération de tri, affecter à chacun des moyens d'accrochage un code représentatif de l'ordre selon lequel on souhaite récupérer les articles à la fin du tri créant ainsi une liste monotone, et
- des moyens pour amener chaque moyen d'accrochage vers un poste de déchargement situé en un second point prédéterminé de la trajectoire des moyens d'accrochage, ce poste de déchargement comprenant quant à lui, un moyen de déchargement qui, en réponse à un ordre de commande approprié, saisit l'article situé en regard de ce point prédéterminé et l'améne au dessus d'une barre de déchargement ou l'article est laché, cette barre de déchargement se prolongeant par une barre de stockage.

Avec cette installation :
- le préposé chargé de la faire fonctionner saisit un article, l'accroche sur le premier moyen d'accrochage qui se présente à lui, introduit par la même opération ou séparément les données correspondantes à l'article accroché dessus et ainsi de suite,
- l'opération de tri s'effectue ensuite selon au moins un critère de tri puis cette opération terminée,
- chaque moyen d'accrochage est, dans un ordre prédéterminé, acheminé vers le poste de déchargement.

Dans ces installations, le nombre de moyens d'accrochage est trés important et généralement de l'ordre de six cents et l'écart entre chaque moyen d'accrochage est d'environ trente millimètres.

La longueur totale du convoyeur atteint des dimensions importantes, par exemple, de dix huit mètres.

Le convoyeur pouvant tourner dans les deux sens, la distance maximale qui sépare la position de l'article à décharger du poste de déchargement est comprise entre trente millimètres et neuf mètres.

Compte tenu du chargement aléatoire, on pourrait estimer le déplacement moyen de chaque moyen d'accrochage d'environ quatre mètres.

On se rend compte tout de suite que le temps mis pour amener un moyen d'accrochage au droit du moyen de déchargement est important par rapport au temps lié au tri informatique.

Ce temps est d'autant plus important que le convoyeur est long.

Il est très difficile de réduire l'écart entre les moyens d'accrochage sans augmenter le risque, au moment de l'extraction d'un article, d'extraire un article voisin.

Un des résultats que l'invention vise à obtenir est un procédé de déchargement du type cité plus haut qui remédie à ces inconvénients.

A cet effet, l'invention se rapporte à un tel procédé notamment caractérisé en ce que :
* préalablement au déchargement :
   - on fractionne la liste monotone dite principale contenant les nouveaux numéros d'ordre en N sous-listes avec N au moins égale à 2, les sous listes mises bout à bout reconstituant la liste principale,
   - en aval des moyens de déchargement, sont disposés autant de barres de stockage que de sous listes, chaque barre de stockage devant accueillir une des sous listes rangées précitées et
   - entre le moyen de déchargement et les barres de stockage, est installé un aiguillage dirigeant les articles provenant du bras de déchargement vers l'une ou l'autre des barres de stockage,
* pour l'opération de déchargement:
   - pour chaque sous liste, on affecte au premier article de cette sous liste devant être déchargé le qualificatif de premier,
   - on recherche parmi les N premiers articles des sous listes à décharger celui situé le plus près du poste de déchargement,
   - lorsque cet article est déterminé, on l'amène vers le poste de déchargement :
      . on positionne l'aiguillage selon la barre de stockage auquel il est destiné,
      . on lache l'article sur la barre de déchargement, l'article étant alors acheminé via l'aiguillage vers sa barre de stockage,
      . parallèlement à cette opération de déchargement, pour l'article suivant celui venant d'être sélectionné, on lui affecte la qualité de premier article de la sous liste considéré et
      . on recherche à nouveau, parmi les N nouveaux premiers articles des sous listes, celui le plus proche du poste de déchargement,
   - on amène ce nouvel article sélectionné vers le poste de déchargement et
   - on recommence l'opération de déchargement et de réaffectation de la qualité de premier à l'article suivant de la sous liste dans laquelle a été extrait le dit article et
   - on recommence les dites opérations précédentes jusqu'à extraction de tous les articles.

L'invention se rapporte également aux moyens en vue de la mise en oeuvre de ce procédé ainsi qu'aux convoyeurs pourvus des dits moyens.

L'invention sera bien comprise à l'aide de la description ci-après faites à titre d'exemple non limitatif en regard du dessin ci-annexé qui reprèsente schématiquement :

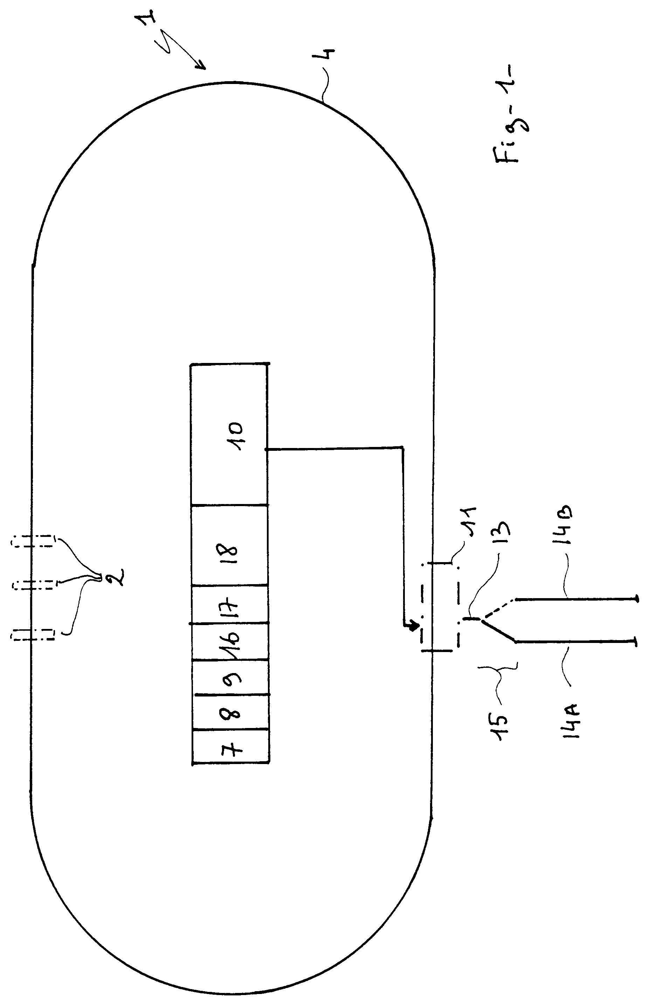

- figure 1 : vue de dessus d'une installation de déchargement,

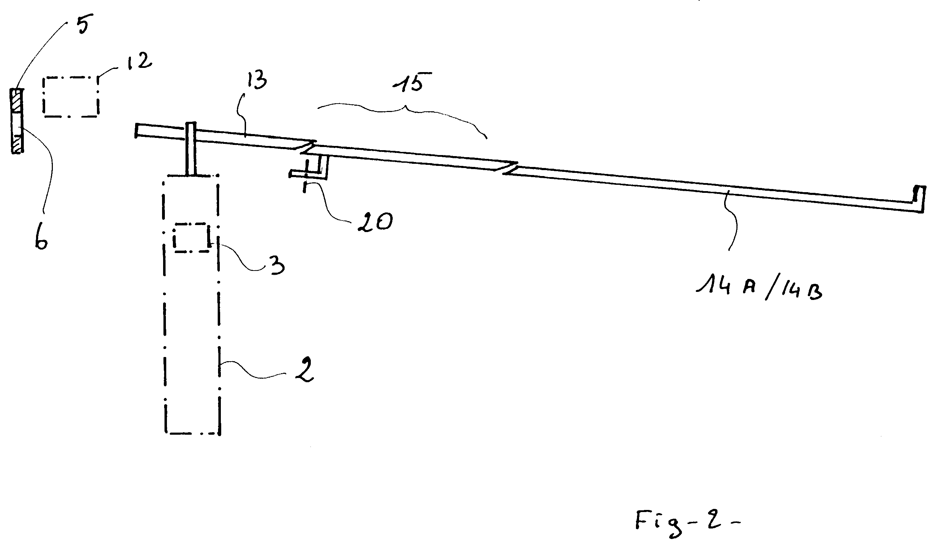

- figure 2 : vue d'un poste de déchargement d'une installation de déchargement.

En se reportant au dessin, on voit que dans l'intallation 1 de tri et de déchargement d'articles 2 suspendus à un convoyeur en boucle, chaque article comporte un moyen 3 permettant d'identifier son propriétaire.

De manière classique, l'installation comprend :
- un convoyeur 4 en boucle comprenant un lien 5 sans fin tel une chaine ou une bande souple se déplacant au long d'une trajectoire prédéterminée et présentant à intervalles réguliers des moyens d'accrochage 6, tels des orifices découpés dans une bande ou des crochets associés à une chaine etc ... sur lesquels moyens d'accrochage du convoyeur peuvent se suspendre, par exemple, à l'aide de cintres, les articles à trier, la position instantanée de ces moyens d'accrochage du convoyeur étant déterminable par rapport à un point de la trajectoire du convoyeur dit point de référence,
- des moyens 7 dits de mémorisation mémorisant pour chaque moyen d'accrochage des données issues au moins indirectement du moyen d'identification associé au vêtement suspendu au moyen d'accrochage considéré,
- des moyens 8 pour effectuer un tri informatique selon au moins un critère de tri,
- des moyens 9 pour, après l'opération de tri, affecter à chacun des moyens d'accrochage un code représentatif de l'ordre selon lequel on souhaite récupérer les articles à la fin du tri, et
- des moyens 10 pour amener chaque moyen d'accrochage vers un poste 11 de déchargement situé en un second point prédéterminé de la trajectoire des moyens d'accrochage, ce poste de déchargement comprenant quant à lui, un moyen 12 de déchargement qui, en réponse à un ordre de commande approprié, saisit l'article situé en regard de ce point prédéterminé et l'améne au dessus d'une barre 13 de déchargement ou l'article est laché, cette barre de déchargement se prolongeant par une barre 14A, 14B de stockage.

Avec cette installation, le préposé chargé de la faire fonctionner commence par placer tous les articles sur le convoyeur.

A cet effet :
- on accroche sur chaque moyen d'accrochage un article,
- on introduit par la même opération ou séparément les données correspondantes à l'article accroché dessus et ainsi de suite,
- l'opération de tri s'effectue ensuite selon au moins un critère puis l'opération terminée,
- chaque moyen d'accrochage, est dans un ordre prédéterminé, acheminé vers le poste de déchargement où il sera placé dans l'ordre souhaité pour la distibution.

Bien entendu, il est possible de prévoir un chargement automatique avec une lecture automatique du moyen d'identification que porte chaque article.

Selon une caractéristique essentielle du procédé :
* préalablement au déchargement :
   - on fractionne la liste monotone dite principale contenant les nouveaux numéros d'ordre en N sous-listes avec N au moins égale à 2, les sous listes fusionées à bout reconstituant la liste principale,
   - en aval des moyens de déchargement, sont disposés autant de barres 14A, 14B de stockage que de sous listes, chaque barre de stockage devant accueillir une des sous listes rangées précitées et
   - entre le moyen 12 de déchargement et les barres 14A, 14B de stockage, est installé un aiguillage 15 dirigeant les articles provenant du bras de déchargement vers l'une ou l'autre des barres de stockage,
* pour l'opération de déchargement:
   - pour chaque sous liste, on affecte au premier article de cette sous liste devant être déchargé le qualificatif de premier,
   - on recherche parmi les N premiers articles des sous listes à décharger celui situé le plus près du poste de déchargement,
   - lorsque cet article est déterminé, on l'amène vers le poste de déchargement :
      . on positionne l'aiguillage selon la barre de stockage auquel il est destiné,
      . on lache l'article sur la barre de déchargement, l'article étant alors acheminé via l'aiguillage vers sa barre de stockage,
      . parallèlement à cette opération de déchargement, pour l'article suivant celui venant d'être sélectionné, on lui affecte la qualité de premier article de la sous liste considéré et
      . on recherche à nouveau parmi les N nouveaux premiers articles des sous listes celui le plus proche du poste de déchargement,
   - on amène ce nouvel article sélectionné vers le poste de déchargement et
   - on recommence l'opération de déchargement et de réaffectation de la qualité de premier à l'article suivant de la sous liste dans laquelle a été extrait le dit article et
   - on recommence les dites opérations précédentes jusqu'à extraction de tous les articles.

Ceci permet de gagner approximativement 30% sur le temps de déchargement.

On constitue des sous listes dont les numéros d'ordre sont croissants ou décroissants et on décharge ces sous listes soit en ordre croissant, soit en ordre décroissant.

Cependant, on peut également décharger ces sous listes alternativement en ordre croissant ou décroissant.

Ce déchargement terminé, on peut également fusionner les sous listes.

Il pourrait également être possible de constituer ces sous listes contenant des numéros impairs et pairs et qui sont ensuite fusionnées.

Pour la mise en oeuvre du procédé, les moyens comprennent :
- en aval du moyen 12 de déchargement un nombre N prédéterminé de barres 14A, 14B de stockage avec N au moins égal à 2 et
- entre le moyen de déchargement et les barres de stockage, un aiguillage 15 apte à orienter l'article provenant des moyens de déchargement vers l'une des N barres de stockage.

Les moyens comprennent en outre :
- des moyens 16 pour fractionner une liste monotone dite principale en N sous listes également monotone qui, mises bout à bout, reconstituent la liste principale,
- des moyens 17 pour rechercher parmi les N premiers articles des sous listes à décharger celui situé le plus près du moyen de déchargement et
- des moyens 10 pour amener l'article sélectionné au poste de déchargement.

Ils comprennent également des moyens 18 qui, lorsqu'un article dit premier vient d'être sélectionné dans une sous liste, réaffecte à l'article suivant la qualité d'article premier à extraire de la sous liste.

L'aiguillage sera, par exemple, constitué d'une tige métallique portée par un axe 20 et déplacé par un moyen moteur tel un vérin.

## Revendications

1. Procédé de déchargement d'articles (2) suspendus à un convoyeur à boucle mettant en oeuvre une installation de déchargement comprenant :
- un convoyeur (4) en boucle comprenant un lien (5) sans fin tel une chaine ou une bande souple se déplacant au long d'une trajectoire prédéterminée et présentant à intervalles réguliers des moyens d'accrochage (6), tels des orifices découpés dans une bande ou des crochets associés à une chaine etc ... sur lesquels moyens d'accrochage du convoyeur peuvent se suspendre, par exemple, à l'aide de cintres, les articles à trier, la position instantanée de ces moyens d'accrochage du convoyeur étant déterminable par rapport à un premier point de la trajectoire du convoyeur dit point de référence,
- des moyens (7) dits de mémorisation mémorisant pour chaque moyen d'accrochage des données issues au moins indirectement du moyen d'identification associé au vêtement suspendu au moyen d'accrochage considéré,
- des moyens (8) pour effectuer un tri informatique selon au moins un critère de tri,
- des moyens (9) pour, après l'opération de tri informatique, affecter à chacun des moyens d'accrochage un code représentatif de l'ordre selon lequel on souhaite récupérer les articles à la fin du tri, et
- des moyens (10) pour amener chaque moyen d'accrochage vers un poste (11) de déchargement situé en un second point prédéterminé de la trajectoire des moyens d'accrochage, ce poste de déchargement comprenant quant à lui, un moyen (12) de déchargement qui, en réponse à un ordre de commande approprié, saisit l'article situé en regard de ce point prédéterminé et l'améne au dessus d'une barre (13) de déchargement ou l'article est laché, cette barre de déchargement se prolongeant par une barre (14A, 14B) de stockage,
selon lequel procédé :
- on accroche sur chaque moyen d'accrochage un article,
- on introduit par la même opération ou séparément les données correspondantes à l'article accroché dessus et ainsi de suite,
- l'opération de tri s'effectue ensuite selon au moins un critère puis l'opération terminée,
- chaque moyen d'accrochage, est dans un ordre prédéterminé, acheminé vers le poste de déchargement où il sera placé dans l'ordre souhaité pour la distibution,
suivant ce procédé :
* préalablement au déchargement :
- on fractionne la liste monotone dite principale contenant les nouveaux numéros d'ordre en N sous-listes avec N au moins égale à 2, les sous listes mises ensenble reconstituant la liste principale,
- en aval des moyens de déchargement, sont disposés autant de barres (14A, 14B) de stockage que de sous listes, chaque barre de stockage devant accueillir une des sous listes rangées précitées,
* pour l'opération de déchargement :
- pour chaque sous liste, on affecte au premier article de cette sous liste devant être déchargé le qualificatif de premier,
- on recherche parmi les N premiers articles des sous listes à décharger celui situé le plus près du poste de déchargement,
- lorsque cet article est déterminé, on l'amène vers le poste de déchargement, ce procédé étant CARACTERISE en ce que :
- d'une part, entre le moyen (12) de déchargement et les barres (14A, 14B) de stockage, est installé un aiguillage (15) dirigeant les articles provenant du bras de déchargement vers l'une ou l'autre des barres de stockage, et
- d'autre part :
. on positionne l'aiguillage selon la barre de stockage auquel il est destiné,
. on lache l'article sur la barre de déchargement, l'article étant alors acheminé via l'aiguillage vers sa barre de stockage,
. parallèlement à cette opération de déchargement, pour l'article suivant celui venant d'être sélectionné, on lui affecte la qualité de premier article de la sous liste considéré et
. on recherche à nouveau parmi les M nouveaux premiers articles des sous listes celui le plus proche du poste de déchargement,
- on amène ce nouvel article sélectionné vers le poste de déchargement et
- on recommence l'opération de déchargement et de réaffectation de la qualité de premier à l'article suivant de la sous liste dans laquelle a été extrait le dit article et
- on recommence les dites opérations précédentes jusqu'à extraction de tous les articles.

2. Moyens pour la mise en oeuvre du procédé selon la revendication 1 caractérisés en ce qu'ils comprennent :
- en aval du moyen (12) de déchargement un nombre M prédéterminé de barres de stockage avec N au moins égal à 2 et
- entre le moyen de déchargement et les barres de stockage, un aiguillage (15) apte à orienter l'article provenant des moyens de déchargement vers l'une des N barres de stockage.

3. Moyens selon la revendication 2 caractérisés en ce qu'ils comprennent en outre :
- des moyens (16) pour fractionner une liste monotone dite principale en M sous listes également monotone qui, mises bout à bout, reconstituent la liste principale,
- des moyens (17) pour rechercher parmi les M premiers articles des sous listes à décharger celui situé le plus près du moyen de déchargement et
- des moyens (10) pour amener l'article sélectionné au poste de déchargement.

4. Moyens selon la revendication 2 ou 3 caractérisés en ce qu'ils comprennent également des moyens (18) qui, lorsqu'un article dit premier vient d'être sélectionné dans une sous liste, réaffecte à l'article suivant la qualité d'article premier à extraire de la sous liste.

5. Convoyeurs caractérisés en ce qu'ils sont pourvus des moyens selon l'une quelconque des revendications 2 à 4.

## Claims

1. Method for discharging articles (2) suspended from a loop conveyor using a discharging installation comprising:
- a loop conveyor (4) comprising an endless member (5) such as a chain or a flexible band moving along a predetermined path and having, at regular intervals, hanging means (6), such as orifices cut out of a band or hooks associated with a chain etc..., on which hanging means of the conveyor there may be suspended, for example with the aid of coat hangers, the articles to be sorted, the instantaneous position of these hanging means of the conveyor being determinable with respect to a first point on the path of the conveyor called the reference point,
- means (7) called storage means which store, for each hanging means, data issued at least indirectly by identification means associated with the garment suspended from the hanging means in question,
- means (8) for carrying out information sorting according to at least one sorting criterion,
- means (9) for allocating, after the information sorting operation, a code representing the order in which it is desired to retrieve the articles at the end of the sorting to each of the hanging means, and
- means (10) for bringing each hanging means to a discharging station (11) situated at a second predetermined point on the path of the hanging means, this discharging station comprising, for its part, a discharging means (12) which, in response to an appropriate command, grasps the article situated facing this predetermined point and brings it above a discharging bar (13) where the article is released, this discharging bar being extended by a storage bar (14A, 14B),
according to which method:
- an article is hung onto each hanging means,
- the data corresponding to the article hung thereon is input by the same operation or separately, and so on,
- the sorting operation is then carried out according to at least one criterion and once the operation is completed,
- each hanging means it conveyed, in a predetermined order, to the discharging station where it will be placed in the desired order for distribution,
according to this method:
* prior to discharging:
- the monotonic list called the main list which contains the new serial numbers is split into N sublists with N being at least equal to 2, the sublists, when put together, reconstituting the main list,
- downstream of the discharging means there are disposed is many storage bars (14A, 14B) as there are sublists, each storage bar having to receive one of the above-mentioned ordered sublists,
* for the discharging operation:
- for each sublist, the qualifier first is allocated to the first article in this sublist which is to be discharged,
- from the N first articles in the sublists to be discharged, that situated nearest to the discharging station is sought,
- when this article is determined, it is brought to the discharging station,
this method being CHARACTERIZED in that:
- on the one hand, between the discharging means (12) and the storage bars (14A, 14B), there is installed a switch (15) which directs the articles coming from the discharging arm to one or other of the storage bars, and
- on the other hand:
. the switch is positioned in accordance with the storage bar for which it is intended,
. the article is released onto the discharging bar, the article then being routed via the switch to its storage bar,
. parallel to this discharging operation, for the article following that which has just been selected, the designation of first article in the sublist in question is allocated to it and
. from the N new first articles in the sublists, that situated nearest to the discharging station is again sought,
- this new selected article is brought to the discharging station and
- the discharging operation and that of reallocating the designation of first to the following article in the sublist from which the said article has been extracted are recommenced and
- the said preceding operations are recommenced until all the articles are extracted.

2. Means for carrying out the method according to claim 1, characterized in that they comprise:
- downstream of the discharging means (12) a predetermined number N of storage bars with N being at least equal to 2 and
- between the discharging means and the storage bars, a switch (15) adapted to direct the article coming from the discharging means to one of the N storage bars.

3. Means according to Claim 2, characterized in that they further comprise:
- means (16) for splitting a monotonic list called the main list into N likewise monotonic sublists which, when put end to end, reconstitute the main list,
- means (17) for seeking, from the N first articles in the sublists to be discharged, that situated nearest to the discharging means and
- means (10) for bringing the selected article to the discharging station.

4. Means according to claim 2 or 3, characterized in that they also comprise means (18) which, when an article called the first article has just been selected from a sublist, reallocates the designation of first article to be extracted from the sublist to the following article.

5. Conveyors, characterized in that they are provided with means according to any one of Claims 2 to 4.

## Patentansprüche

1. Verfahren zur Entnahme von Gegenständen (2), die an einem Umlaufförderer aufgehängt sind, unter Einsatz einer Entnahmeanlage, welche folgendes aufweist:
- einen Umlaufförderer (4) mit einem endlosen Verbindungsteil (5) wie beispielsweise einer Kette oder eines flexiblen Bandes, welches sich entlang einer vorgegebenen Bahn bewegt und in regelmäßigen Abständen Mitnahme- bzw. Einhängmittel (6) wie beispielsweise in ein Band eingeschnittene Öffnungen oder mit einer Kette verbundene Haken etc. aufweist, wobei auf diesen Einhängmitteln des Förderers beispielsweise mit Hilfe von Bügeln die zu sortierenden Gegenstände aufhängbar sind, und wobei die augenblickliche Stellung dieser Einhängmittel des Förderers bezüglich eines als Bezugspunkt bezeichneten ersten Punktes auf der Bahn des Förderers bestimmbar ist,
- als Speichereinrichtungen bezeichnete Mittel (7), welche für jedes Einhängmittel Daten speichern, die zumindest indirekt von einer dem mit Hilfe des jeweiligen Einhängmittels aufgehängten Kleidungsstück zugeordneten Einrichtung abgegeben werden,
- Einrichtungen (8) zur Vornahme einer informationstechnischen Sortierung und Verteilung nach mindestens einem Sortierkriterium, und
- Einrichtungen (10) zur Heranführung jedes Einhängmittels zu einer Entnahmestation (11), die sich an einem vorgegebenen zweiten Punkt auf der Bahn der Einhängmittel befindet und ihrerseits eine Entnahmeeinrichtung (12) umfaßt, welche im Ansprechen auf eine entsprechende Befehlsfolge den gegenüber diesem vorgegebenen Punkt befindlichen Gegenstand erfaßt und ihn über eine Entnahmestange (13) führt, wo der Gegenstand losgelassen wird, wobei sich diese Entnahmestange in einer Lagerstange (14A, 14B) fortsetzt,
bei welchem Verfahren:
- auf jedes Einhängmittel ein Gegenstand eingehängt wird,
- mit dem selben Vorgang oder getrennt von diesem die dem darüber eingehängten Gegenstand entsprechenden Daten und somit in Folge eingegeben werden,
- der Sortiervorgang anschließend nach mindestens einem Kriterium vorgenommen und dann der Arbeitsgang beendet wird,
- jedes Einhängmittel in einer vorgegebenen Reihenfolge zur Entnahmestation geführt wird, wo es in der für die Verteilung gewünschten Reihenfolge plaziert wird,
wobei gemaß diesem Verfahren:
* vor der Entladung:
- die als Hauptliste bezeichnete auf- oder absteigend geordnete Liste, welche die neuen Ordnungsnummern enthält, in N Teillisten aufgeteilt wird, wobei N mindestens gleich 2 ist, wobei die Teillisten beim Zusammensetzen wieder die Hauptliste ergeben,
- hinter den Entnahmeeinrichtungen ebenso viele Lagerslangen (14A, 14B) wie Teillisten angeordneten sind, wobei jede Lagerstange eine der vorgenannten geordneten Teillisten aufnehmen soll,
* für den Entnahmevorgang:
- für jede Teilliste dem ersten zu entnehmenden Gegenstand aus dieser Teilliste das Qualifizierungsmerkmal des Ersten zugeordnet wird,
- unter den N zu entnehmenden ersten Gegenständen aus den Teillisten nach dem Gegenstand gesucht wird, der sich am nächsten zur Entnahmestation befindet,
- wenn dieser Gegenstand ermittelt ist, wird dieser zur Entnahmestation befördert,
dadurch GEKENNZEICHNET, daß:
- zum einen zwischen der Entnahmeeinrichtung (12) und den Lagerstangen (14A, 14B) eine Weicheneinrichtung (15) eingebaut ist, welche die vom Entnahmearm kommenden Gegenstände zu der einen oder der anderen Lagerstange leitet, und
- zum anderen:
· die Weicheneinrichtung entsprechend der Lagerstange gestellt wird, welche ihr Ziel ist,
· der Gegenstand auf die Entnahmestange gelassen wird, wobei der Gegenstand nun über die Weicheneinrichtung zu seiner Lagerstange geführt wird,
· parallel zu diesem Entnahmevorgang dem nachfolgenden Gegenstand, der auf den gerade gewählten folgt, nun die Qualität eines ersten Gegenstands in der jeweiligen Teilliste zugeordnet wird, und
· erneut unter den N neuen ersten Gegenständen aus den Teillisten jener Gegenstand gesucht wird, welcher der Entnahmestation am nächsten ist,
- dieser neue ausgewählte Gegenstand zur Entnahmestation befördert wird, und
- der Entnahmevorgang mit erneuter Zuordnung der Qualität des Ersten zum nachfolgenden Gegenstand in der Teilliste, aus welcher dieser Gegenstand herausgesucht wurde, erneut beginnt, und
- die genannten vorhergehenden Arbeitsgänge bis zur Entnahme aller Gegenstände wieder begonnen werden.

2. Mittel zur Durchführung des Verfahrens nach Anspruch 1 , dadurch gekennzeichnet, daß sie folgendes aufweisen:
- hinterder Entnahmeeinrichtung (12) eine vorgegebene Anzahl von Lagerstangen, wobei N mindestens gleich 2 ist, und
- zwischen der Entnahmeeinrichtung und den Lagerstangen eine Weicheneinrichtung (15), welche in der Lage ist, den von der Entnahmeeinrichtung kommenden Gegenstand zu einer der N Lagerstangen zu lenken.

3. Mittel nach Anspruch 2, dadurch gekennzeichnet, daß sie unter anderem folgendes umfassen:
- Mittel (16) zum Aufteilen einer monoton auf- oder absteigend geordneten sogenannten Hauptliste in N ebenfalls monoton auf- oder absteigend geordnete Teillisten, welche aneinandergereiht wieder die Hauptliste bilden,
- Mittel (17) zur Suche unter den N ersten zu entnehmenden Gegenständen aus den Teillisten zur Ermittlung des Gegenstands, der am nächsten zur Entnahmeeinrichtung liegt, und - Mittel (10) zur gezielten Beförderung des Gegenstands zur Entnahmestation.

4. Mittel nach Anspruch 2 oder 3, dadurch gekennzeichnet, daß sie des weiteren eine Einrichtung (18) aufweisen, welche dann, wenn ein als Erster bezeichneter Gegenstand in einer Teilliste ausgewählt wurde, dem nachfolgenden Gegenstand wieder die Qualität eines ersten Gegenstands zugeordnet, der aus der Teilliste zu entnehmen ist.

5. Förderer, dadurch gekennzeichnet, daß sie mit Einrichtungen und Mitteln nach einem der Ansprüche 2 bis 4 ausgerüstet sind.
